(19) Europäisches Patentamt
European Patent Office
Office européen des brevets

(11) **EP 1 970 797 A1**

(12) **EUROPEAN PATENT APPLICATION**

(43) Date of publication:
**17.09.2008 Bulletin 2008/38**

(51) Int Cl.:
***G06F 3/033*** *(2006.01)*     ***G06F 3/03*** *(2006.01)*

(21) Application number: **07251124.9**

(22) Date of filing: **16.03.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(71) Applicant: **Leahsin Technologies Inc.**<br>**Taipei City (TW)** | (72) Inventor: **Lin,Timothy**<br>**Wun Shan District**<br>**Taipei (TW)**<br><br>(74) Representative: **Gillard, Matthew Paul et al**<br>**Withers & Rogers LLP**<br>**Goldings House**<br>**2 Hays Lane**<br>**London**<br>**SE1 2HW (GB)** |

(54) **Method of speckle size and distribution control and the optical system using the same**

(57)     A method of speckle size and distribution control and the optical system using the same are disclosed. The optical system is arranged inside a housing of a computer mouse that is primarily composed of a laser unit, a lens set, an image sensing unit and a digital signal processing unit. It is known that by projecting a laser beam onto a surface with sufficient roughness, the surface will exhibits a speckled appearance as the speckle pattern is a random intensity pattern produced by the mutual interference of coherent laser beam that are subject to phase differences and/or intensity fluctuations. Thus, the present invention provides an optical system capable of controlling the speckle sizes and the speckle pattern distribution by adjusting the bandwidth of a coherent laser beam being emitted out of the laser light source of the optical system as well as by adjusting the distance between an image plane of the digital signal processing unit and the rough surface being illuminated by the coherent laser beam, so that the distribution of the resulting speckle pattern and the size of each speckle thereof can match with the effective pixel size of different image sensing units used in the optical system. The method and optical system is advantageous in its simple optical path, by which the mechanical structure accuracy is minimized that facilitates and enhances manufacturers of different image sensing units to use speckle patterns for determining how far the optical system has moved and in which direction it is moved.

FIG. 14

Printed by Jouve, 75001 PARIS (FR)

EP 1 970 797 A1

**Description**

## FIELD OF THE INVENTION

The present invention relates to a method of speckle size and distribution control and the optical system using the same, and more particularly, to an optical system which uses a laser unit and a lens set designed specifically for the laser unit instead of the conventional LED unit and its lens set with light collimation ability as its light source so as to controls the speckle sizes and the speckle pattern distribution by adjusting the bandwidth of a coherent laser beam being emitted out of the laser unit as well as by adjusting the distance between an image plane of the digital signal processing unit and the rough surface being illuminated by the coherent laser beam, by which the distribution of the resulting speckle pattern and the size of each speckle thereof can match with the effective pixel size of different image sensing units used in the optical system. The method and optical system is advantageous in its simple optical path, by which the mechanical structure accuracy is minimized that facilitates and enhances manufacturers of different image sensing units to use different speckle techniques for determining how far the optical system has moved and in which direction it is moved, not to mention that the detection sensitivity of the optical system is adjustable within a predefined range. It is known that if the working surface of a conventional LED optical mouse is a smooth surface made of marble, tile, or metal, etc., the image processing unit used in such LED mouse might not be able to detect patterns of shadows generated by the roughness of the surface and operate without a hitch so as to accurately calculate how far and in what direction the LED mouse has moved. Hence, the method of speckle size and distribution control and the optical system using the same are provided not only for overcoming the inaccuracy of the conventional LED mouse, but also with enhanced convenience of usage by enabling the optical system to be operable on smooth surface as well as with improved operation sensitivity.

## BACKGROUND OF THE INVENTION

With the rapid development and popularization of computers, more and more attention had been paid to the development of more user-friendly human-machine interfaces, such as keyboard, computer mouse, for facilitating the applications of computers. Among those, computer mouse especially appears to be the input device preferred by many computer applications. Currently, there are many kinds of computer mouse available on the market, which are the most popular human-machine interface used by computers as cursor-control device. There are two basic types of mice, which are mechanical mouse, and optical mouse with respect to the different means of detection. A typical mechanical mouse comprises a chassis containing a ball, with a part of the ball protruding through the underside of the chassis. When an user moves the mouse about on a flat surface, the ball rotates which is detected by the sensors arranged in the chassis. Unfortunately the moving parts of such a mouse can become dirty, causing the sensors to incorrectly measure ball rotation. A typical optical mouse has a small light-emitting diode (LED) that bounces light off that surface with sufficient roughness onto a complimentary metal-oxide semiconductor (CMOS) sensor. The CMOS sensor sends each image to a digital signal processor (DSP) for analysis, that the DSP is able to detect patterns of shadows generated by the roughness of the surface in the images and see how those patterns have moved since the previous image. Based on the change in patterns over a sequence of images, the DSP determines how far the mouse has moved and sends the corresponding coordinates to the computer.

From the above description, it is noted that the accuracy of such LED optical mouse is determined upon whether the LED of the optical mouse is capable of effectively bouncing light off that surface with sufficient roughness onto its CMOS sensor to be used for forming sufficient shadow patterns with high efficiency.

Moreover, if the working surface of the LED optical mouse is a smooth surface made of marble, tile, or metal, etc., the CMOS sensor used in such LED mouse might not be able to detect patterns of shadows generated by the roughness of the surface and operate without a hitch so as to accurately calculate how far and in what direction the LED mouse has moved. Hence, not only the usage of such LED mouse is restricted, but also its detection sensitivity might be severely affected.

Therefore, it is in need of a method of speckle size and distribution control and the optical system using the same not only for overcoming the inaccuracy of the conventional LED mouse, but also with enhanced convenience of usage by enabling the optical system to be operable on smooth surface as well as with improved operation sensitivity.

## SUMMARY OF THE INVENTION

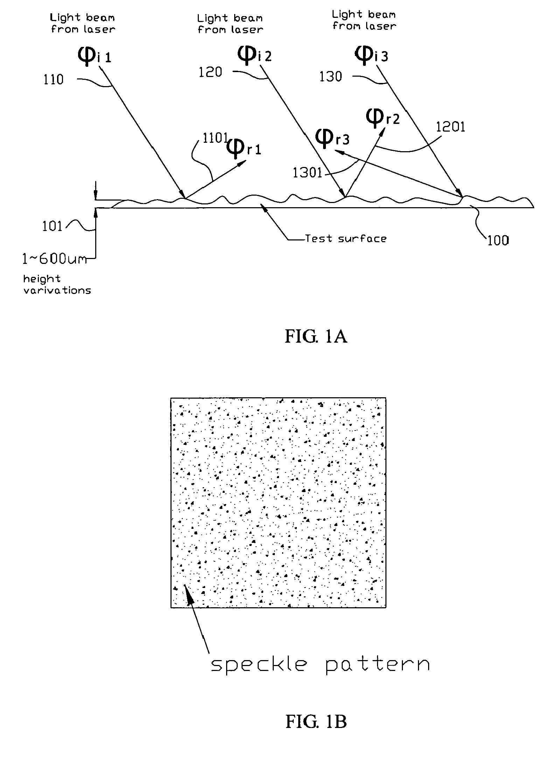

It is the primary object of the present invention to provide a method of speckle size and distribution control and the optical system using the same, in that the optical system uses a laser unit and a lens set designed specifically for the laser unit instead of the conventional LED unit and its lens set with light collimation ability as its light source so as to emit a coherent light for detecting more surface pattern variation than the standard LED based optical mice, since by projecting a laser beam onto a surface with sufficient roughness, i.e. the average height variation of the surface is larger than the wavelength of that laser beam as seen in FIG. 1A, the surface will exhibits a speckled appearance which is not observed when the surface is illuminated with ordinary light, such as the LED light of a standard LED mouse, as the speckle pattern seen in FIG. 1B is a random intensity pattern produced by the mutual interference of coherent laser beam that are subject to phase differences and/or intensity fluctuations.

In order to better design an optical system capable of fully utilizing the benefits of speckle pattern, a detail study and technical analysis relating to speckle interferometry will be provided hereinafter.

A speckle pattern is a random intensity pattern produced by the mutual interference of coherent wavefronts that are subject to phase differences and/or intensity fluctuations. Prominent examples include the seemingly random pattern created when a coherent laser beam is reflected off a rough surface. Each point in the intensity pattern is a superposition of each point of the rough surface contributing with a random phase due to path length differences. If the surface is rough enough to create pathlength differences exceeding a wavelength, the statistics of the speckle field will correspond to a random walk in the complex plane. If the contributions are large, corresponding to a large illuminated surface, the field will follow a circular complex distribution, where both the real and imaginary parts are normally distributed with a zero expected value and the same standard deviations. Furthermore, the real and imaginary parts are uncorrelated. This gives a negative exponential distribution for the intensity. This is the root of the classic speckle appearance-mainly dark areas with bright islands.

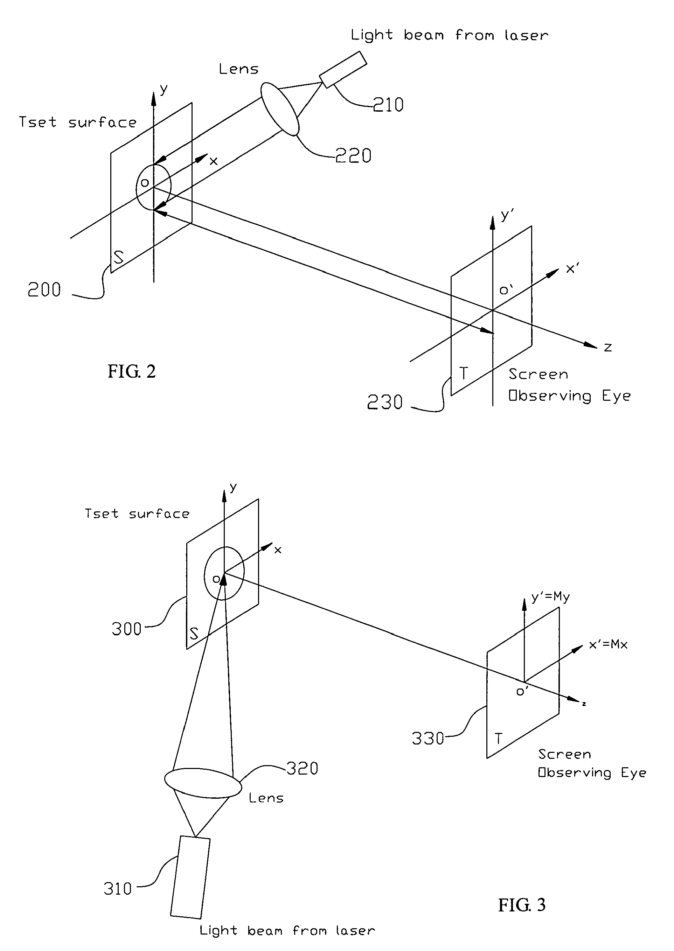

For clarity, it is intended to describe the light intensity distribution function of speckle pattern herein. As the statistics of the speckle field will correspond to a random walk in the complex plane, temporal speckle pattern formed on an observation plane when a laser beam illuminates a continual deformation object surface will be study first in order to better study the light intensity distribution function of speckle pattern. As seen in FIG. 2 ~ FIG. 4, laser beam of a laser device 210 illuminates a diffuse surface **S** through the collimation of a lens set 220 where it is reflected and scattered for imaging a speckle pattern on an *observation surface **T***. Assuming the diffuse surface **S** is being illuminated by a linearly polarized monochromic light and has N independent diffusing units formed thereon, each being a microscopic roughness capable of effecting the reflection angle of the reflected light, thus

$$U_k(r) = \frac{1}{\sqrt{N}} a_k(r) e^{i\phi_k(r)} \tag{1}$$

representing a complex amplitude of an elementary lightwave, i.e. the phase-amplitude vector, of the kth diffusing unit at an observation point, wherein $\frac{1}{\sqrt{N}} a_k(r)$ represents a random length of the phase-amplitude vector, $e^{i\phi k(r)}$ represents the random phase of the phase-amplitude vector. Therefore, by superposing the phase-amplitude vectors of the all the N diffusing units at the observation point, one can obtain:

$$U(r) = ae^{i\theta} \frac{1}{\sqrt{N}} \sum_{k=1}^{N} a_k(r) e^{i\phi_k(r)} \tag{2}$$

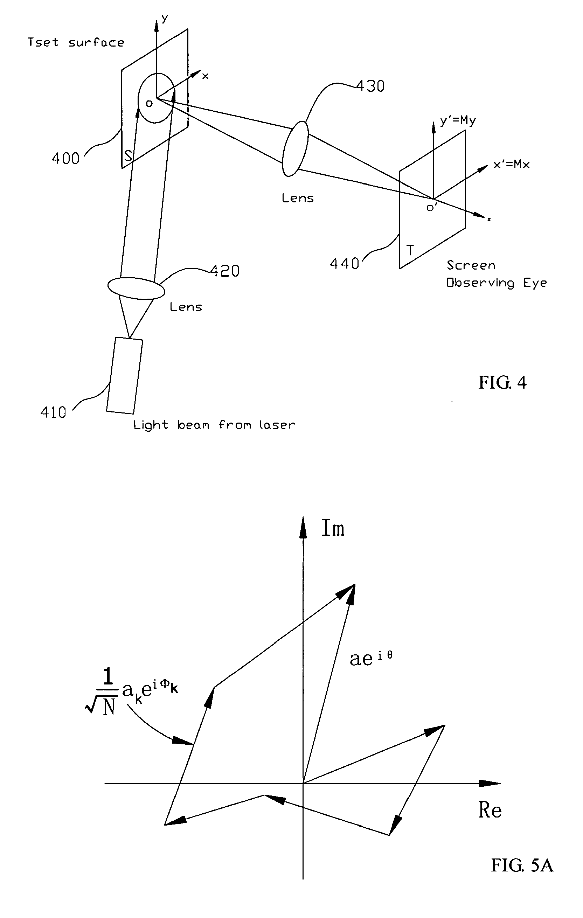

Hence, it is obvious that after the coherent laser beam incident upon the diffuse surface, the coherent filed of the laser beam is scattered and transformed into a non-coherent field as it is shown on the formula (2) that all the value required for acquiring the *U(r)* are random values. The real and imaginary parts of *U(r)* can be represented as following and illustrated in FIG. 5A:

$$\begin{cases} U^{(r)} = \mathrm{Re}\{ae^{i\theta}\} = \frac{1}{\sqrt{N}} \sum_{k=1}^{N} a_k \cos\phi_k \\ U^{(i)} = \mathrm{Im}\{ae^{i\theta}\} = \frac{1}{\sqrt{N}} \sum_{k=1}^{N} a_k \sin\phi_k \end{cases} \tag{3}$$

For facilitating the convenience of analysis, the complex amplitude of an elementary lightwave is assumed to have the following statistic characteristics:

(1) The amplitude and phase of each elementary lightwave are uncorrelated while they are not correlated respectively to the amplitude and phase of other elementary lightwave.

(2) The distributions of the random amplitude $\alpha_k$, k=1, ..., N, are all the same, whereas the average is $\langle\alpha\rangle$ and the second moment is $\langle\alpha^2\rangle$.

(3) All the phase $\phi_k$, ranged between $-\pi$ and $+\pi$ are all homogeneously distributed.

Thus, when N is sufficiently large, the real and imaginary parts of $U(r_0)$ at the observation point are independent to each other, whose average equals to zero and are described as irregular Gaussian distributions. In fact, as the distributions of the random amplitude $\alpha_k$, k=1, ..., N, are all the same, and $\alpha_k$ is independent to $\phi_k$, the averages of the real portion $U^{(r)}$ and the imagery portion $U^{(i)}$ of $U(r)$ can be obtained by the following formulas:

$$\left\langle U^{(r)} \right\rangle = \frac{1}{N} \sum_{k=1}^{N} \left\langle a_k \cos\phi_k \right\rangle = \sum_{n=1}^{N} \left\langle a_k \right\rangle \left\langle \cos\phi_k \right\rangle$$

$$\left\langle U^{(i)} \right\rangle = \frac{1}{N} \sum_{k=1}^{N} \left\langle a_k \sin\phi_k \right\rangle = \sum_{n=1}^{N} \left\langle a_k \right\rangle \left\langle \sin\phi_k \right\rangle$$

Moreover, as all the phase $\phi_k$, ranged between $-\pi$ and $+\pi$ are all homogeneously distributed, $\langle\cos\phi_k\rangle = 0$ and $\langle\sin\phi_k\rangle = 0$ when N is sufficiently large.

Thus

$$\left\langle U^{(r)} \right\rangle = 0, \left\langle U^{(i)} \right\rangle = 0 \tag{4}$$

In addition, it can proved that the real and the imagery portions of the complex amplitude are independent to each other, as following:

$$\left\langle U^{(r)} U^{(i)} \right\rangle = \frac{1}{\sqrt{N}} \sum_{k=1}^{N} \sum_{n=1}^{N} \left\langle a_k a_n \right\rangle \left\langle \cos\phi_k \sin\phi_n \right\rangle$$

whereas

$$\left\langle \cos\phi_k \sin\phi_n \right\rangle = \begin{cases} \left\langle \cos\phi_k \right\rangle \left\langle \sin\phi_k \right\rangle = 0, k \neq n \\ \frac{1}{2} \left\langle \sin 2\phi \right\rangle, k = n \end{cases}$$

Therefore,

$$\left\langle U^{(r)} U^{(i)} \right\rangle = 0$$

$$(5)$$

From the above formulas, it is noted that $U^{(r)}$ and $U^{(i)}$ are independent to each other and both being the sum of many independent values. Hence, when N is sufficiently large, they are Gaussian random variables and have a joint probability-density function as following:

$$P_{r,i}\left(U^{(r)}, U^{(i)}\right) = \frac{1}{\sqrt{2\pi}\sigma} \exp\left[-\frac{\left(U^{(r)} - \left\langle U^{(r)} \right\rangle\right)^2}{2\sigma^2}\right] \bullet \frac{1}{\sqrt{2\pi}\sigma} \exp\left[-\frac{\left(U^{(i)} - \left\langle U^{(i)} \right\rangle\right)^2}{2\sigma^2}\right]$$

$$\frac{1}{2\pi\sigma^2} \exp\left[-\frac{\left(U^{(r)}\right)^2 + \left(U^{(i)}\right)^2}{2\sigma^2}\right] \qquad (6)$$

The value $\sigma$ is the standard deviation, being the measurement of the scattering of the random variable $U^{(r)}$, and its square value $\sigma^2$ is the variance. In order to obtain the variance of $U^{(r)}$, the real portion $\sigma_r^2$ and the imagery portion $\sigma_i^2$ should be calculated first. For discrete random variable x, the variance is defined as:

$$\sigma^2 = \sum_{k=1}^{N} \left(x_k - \left\langle x \right\rangle\right)^2 \Big/ N \qquad (7)$$

As for $U^{(r)}$ and $U^{(i)}$, since $\langle U^{(r)} \rangle = 0, \langle U^{(i)} \rangle = 0$, they are equalized into $\langle (U^{(r)})^2 \rangle$ and $\langle (U^{(i)})^2 \rangle$ so as to calculate $\sigma_r^2$ and $\sigma_i^2$ . By applying the fact *that* $a_k$ is independent to $\phi_k$, one can obtain the following formulas:

$$\left\langle \left(U^{(r)}\right)^2 \right\rangle = \frac{1}{N} \sum_{k=1}^{N} \sum_{n=1}^{N} \left\langle a_k a_n \right\rangle \left\langle \cos\phi_k \cos\phi_n \right\rangle$$

$$\left\langle \left(U^{(i)}\right)^2 \right\rangle = \frac{1}{N} \sum_{k=1}^{N} \sum_{n=1}^{N} \left\langle a_k a_n \right\rangle \left\langle \sin\phi_k \sin\phi_n \right\rangle$$

Moreover, as all the phase $\phi_k$ , ranged between $-\pi$ and $+\pi$ are all homogeneously distributed, and

$$\left\langle \cos\phi_k \cos\phi_n \right\rangle = \left\langle \sin\phi_k \sin\phi_n \right\rangle = \begin{cases} 0, k \neq n \\ \frac{1}{2}, k = n \end{cases}$$

$$\text{Thus, } \left\langle \left(U^{(r)}\right)^2 \right\rangle = \left\langle \left(U^{(i)}\right)^2 \right\rangle = \sigma^2 = \frac{\left\langle a^2 \right\rangle}{2} \tag{8}$$

$\sigma^2$ can be further represented by the following formula:

$$\sigma^2 = \lim_{N \to \infty} \frac{1}{N} \sum_{k=1}^{N} \frac{1}{2} \left\langle a_k^2 \right\rangle \tag{9}$$

For continuous random variable U, the variance can be defined as:

$$\sigma^2 = \int_0^\infty \left(U - \langle U \rangle\right)^2 P_U(U) dU \tag{10}$$

wherein $P_U(U)$ represents a probability-density function.
The expansion of the formula (10) is as following:

$$\sigma^2 = \left\langle U^2 \right\rangle - 2\left(\langle U \rangle\right)^2 + \left(\langle U \rangle\right)^2 = \left\langle U^2 \right\rangle - \left(\langle U \rangle\right)^2 \tag{11}$$

The two random variables U and V can be defined as:

$$\langle UV \rangle = \int\int_0^\infty UV P_{UV}(U,V) dU dV \tag{12}$$

wherein $P_{UV}(U, V)$ represents a joint probability-density function.
In addition, the covariance of the two random variables U, V is defined as:

$$C_{UV} = \left\langle \left(U - \langle U \rangle\right)\left(V - \langle V \rangle\right) \right\rangle = \int\int_0^\infty \left(U - \langle U \rangle\right)\left(V - \langle V \rangle\right) P_{UV}(U,V) dU dV \tag{13}$$

and thus

$$C_{UV} = \langle UV \rangle - \langle U \rangle\langle V \rangle \tag{14a}$$

or

$$\langle UV \rangle = C_{UV} + \langle U \rangle\langle V \rangle \tag{14b}$$

If the two random variables U, V are independent to each other, then $\langle UV \rangle = 0$, and therefore, $C_{UV} = 0$ ;

otherwise, if $C_{UV} \neq 0$, then two random variables U, V are not independent to each other, and it can conclude the relation between the two random variables U, V as following:

$$P_{UV} = \frac{C_{UV}}{\sigma_U \sigma_V} \qquad (15)$$

wherein, the $P_{UV}$ is the U, V correlation coefficient;

$\sigma_U$ is the standard variation of U;

$\sigma_V$ is the standard variation of V;

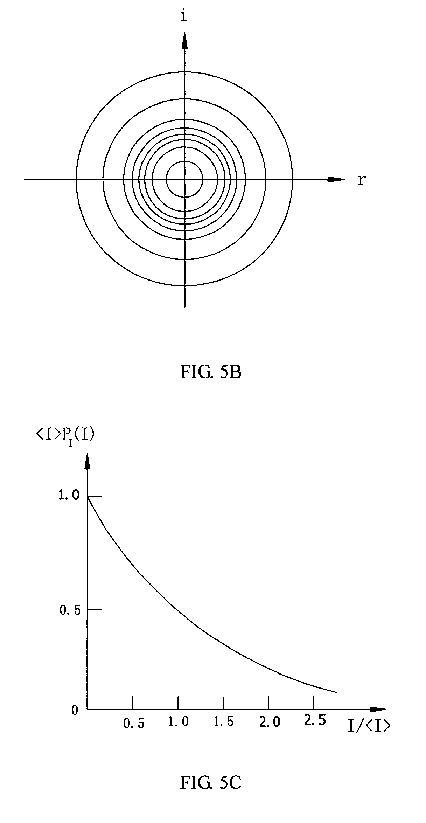

From the above description, it is noted that the complex amplitude $U(r)$ of the speckle field is a random variable, having mutually independent real portion and imagery portion, which has characteristics defined in the above formulas (4), (5) and (8). Thus, those random variables with abovementioned criteria are referred as Gaussian random variable of circular complex, whose equivalence probability-density line can be presented as circles on a complex plane, as seen in FIG. 5B.

For the statistic distribution of light intensity $I$ and phase $\theta$ of the speckle field, their relations with the real and the imagery portions of the complex amplitude can be concluded as following:

$$U^{(r)} = \sqrt{I}\cos\theta, \quad U^i = \sqrt{I}\sin\theta \qquad (16a)$$

or

$$I = \left(U^{(r)}\right)^2 + \left(U^{(i)}\right)^2, \qquad \theta = \arctan\left(\frac{\left(U^{(i)}\right)}{\left(U^{(r)}\right)}\right)$$

$$(16b)$$

For obtaining the joint probability-density function of $I$ and $\theta$, a method of multivariate random variable is used, which are described by the following formula:

let

$$P_{I,\theta}(I,\theta) = P_{r,i}\left(U^{(r)}, U^{(i)}\right)\|J\| \qquad (17)$$

wherein

$$\|J\| = \begin{vmatrix} \dfrac{\partial U^{(r)}}{\partial I} & \dfrac{\partial U^{(r)}}{\partial \theta} \\ \dfrac{\partial U^i}{\partial I} & \dfrac{\partial U^{(i)}}{\partial \theta} \end{vmatrix} \qquad (18)$$

$\|J\|$ is referred as a Jacobian equation. By substituting the formula (16a) into the formula (18), $\|J\|$=1/2. Hence, by substituting the formula (6) into the formula (17), the joint probability-density function of $I$ and $\theta$ can be obtained, which is

$$P_{I,\theta}(I,\theta) = \begin{cases} \dfrac{1}{4\pi\sigma^2}\exp\left(-\dfrac{I}{2\sigma^2}\right) & I \ge 0, -\pi \le \theta \le \pi \\ 0 & others \end{cases} \tag{19}$$

Moreover, the marginal probability-density function for light intensity is listed as following:

$$P_{I,\theta}(I,\theta) = \int_{-\pi}^{\pi} P_{I,\theta}(I,\theta)d\theta = \begin{cases} \dfrac{1}{2\sigma^2}\exp\left(-\dfrac{I}{2\sigma^2}\right) & I \ge 0 \\ 0 & others \end{cases} \tag{20}$$

Similarly, the marginal probability-density function for phase is listed as following:

$$P_{I,\theta}(I,\theta) = \int_{-\pi}^{\pi} P_{I,\theta}(I,\theta)d\theta = \begin{cases} \dfrac{1}{2\pi} & -\pi \le \theta \le \pi \\ 0 & others \end{cases} \tag{21}$$

From the above formula, one can conclude that the light intensity distribution follows Negative exponential statistic while the phase distribution follows Uniform statistics. Moreover,

$$P_{I,\theta}(I,\theta) = P_I(I)P_\theta(\theta) \tag{22}$$

That is, the light intensity and phase at any point in the speckle field are statistically independent to each other.
Referring to formula (20), one can obtain the following formula:

$$\int_0^\infty x^n e^{-ax}dx = \frac{n!}{a^{n+1}}\left(n > -1, a > 0\right) \tag{23}$$

Thus, by letting n=1 and a=1, the light intensity average can be obtained as following:

$$\langle I \rangle = \int_0^\infty I P_1(I)dI = \int_0^\infty I \frac{1}{2\sigma^2} e^{-I/2\sigma^2} dI = 2\sigma^2 \tag{24}$$

Therefore, the formula (20) is transformed into the following:

$$P_I\langle I \rangle = \frac{1}{\langle I \rangle} e^{-I/\langle I \rangle} \tag{25}$$

The profile of $P_I\langle I\rangle$ shown in FIG. 5C illustrates that where the light intensity is zero on the speckle field, the probability density is at its largest.

**[0038]** [0010] The contrast C of a speckle pattern is defined as the following formula:

$$C = \sigma_I \Big/ \langle I\rangle \qquad (26)$$

wherein, $\sigma_1$ is the standard deviation of light intensity;
$\langle I\rangle$ is the average light intensity

The variance of light intensity is defined as:

$$\sigma_I^2 = \int_0^\infty (I - \langle I\rangle)^2 P_I(I)dI = \int_0^\infty \left(I^2 - \langle I\rangle^2 - 2\langle I\rangle I\right)\frac{1}{\langle I\rangle}e^{-I/\langle I\rangle}dI$$

$$= \langle I\rangle^2 \left\{\int_0^\infty x^2 e^{-x}dx + \int_0^\infty e^{-x}dx - 2\int_0^\infty xe^{-x}dx\right\} \qquad (27)$$

Let $x = I/\langle I\rangle$. By the used of formula (23) and let n=2, 0 ,1 and a=1 to be used in formula (27), the second moment of light intensity can be obtained as following:

$$\langle I^2\rangle = \int_0^\infty I^2 P_I(I)dI = 2\langle I\rangle^2 \qquad (28)$$

The variance of light intensity is as following:

$$\sigma_I^2 = 2\langle I\rangle^2 + \langle I\rangle^2 - 2\langle I\rangle^2 = \langle I\rangle^2 \qquad (29a)$$

Thus,

$$\sigma_I = \langle I\rangle \qquad (29b)$$

and

$$C = \sigma_I \Big/ \langle I\rangle = 1 \qquad (30)$$

Therefore, the contrast of the speckle pattern is always equal to 1 so that of the speckle pattern is easily identifiable since the contrast thereof is obvious.

The characteristic size of speckle is usually defined and described by the width of light intensity, obtained by solving the light intensity autocorrelation function of the observation plane. The light intensity autocorrelation function is the square moment of the speckle field, being defined as:

$$e_{II}(r_1, r_2) = \langle I(r_1)I(r_2) \rangle \tag{31}$$

The width of the above autocorrelation function provide a reasonable measurement to the average width of the speckle. When $r_1 = r_2$, $e_{II}(r_1, r_2)$ is at its maximum, however, when $e_{II}(r_1, r_2)$ is at it minimum, the width of a speckle is equal to $\Delta r(x_2 - x_1, y_2 - y_1)$, which is referred as characteristic size. As the complex amplitude of every point in a speckle field is a circular complex Gaussian random variable and let $U = I(r_1)$, $V = I(r_2)$ in formula (14b) while considering the formula (29) and comparing the complex degree of coherence with the coefficients of formula (15), the following formula can be obtained:

$$e_{II}(r_1, r_2) = \langle I(r_1) \rangle \langle I(r_2) \rangle \left\{ 1 + \frac{C_{I(r_1)I(r_2)}}{\langle I(r_1) \rangle \langle I(r_2) \rangle} \right\}$$

$$= \langle I(r_1) \rangle \langle I(r_2) \rangle \left\{ 1 + \left| \frac{\langle P(r_1)P(r_2) \rangle^*}{\sqrt{\langle I(r_1) \rangle \langle I(r_2) \rangle}} \right|^2 \right\} \tag{32}$$

wherein P(r) represents the complex amplitude of light field incident into the diffuse surface.
$\langle P(r_1)P(r_2) \rangle^*$ represents mutual intensity.
In addition,

$$e_{II}(r_1, r_2) = \langle I(r_1) \rangle \langle I(r_2) \rangle \{ 1 + r_{12}(\Delta x, \Delta y) \} \tag{33}$$

wherein $r_{12}(\Delta x, \Delta y)$ is referred as the complex degree of coherence
As the microstructures formed on the scattering surface is very delicate, the width of the coherence area of the light field being scattered is very narrow that the abovementioned $r_{12}(\Delta x, \Delta y)$ will not equal to zero only when $\Delta x$, $\Delta y$ are very small. Thus, in formula (33), let $\langle I(r_1) \rangle \langle I(r_2) \rangle = \langle I(r) \rangle^2$, so that the mutual intensity can be defined by the following:

$$\langle P(r_1) \rangle \langle P(r_2)^* \rangle = K P(r_1) P(r_2)^* \delta(r_1 - r_2) \tag{34}$$

wherein K is a constant.
When the distance z is sufficiently large, the propagating from the diffuse surface to the observation surface can be defined by a Fourier transformation, by which the mutual intensity of the observation surface is defined by the following formula:

$$\langle U(r_{01})U(r_{02})^* \rangle = \frac{K}{(\lambda z)^2} \iint_{\infty}^{\infty} |P(\zeta, \eta)|^2 \exp\left[ -i\frac{2\pi}{\lambda z}(\Delta x \bullet \zeta + \Delta y \bullet \eta) \right] d\zeta d\mu \tag{35}$$

which is the Fourier transformation of light intensity $|(P(\zeta, \eta)|^2$ incident to the diffuse surface.
Hence,

$$r_{12}(\Delta x, \Delta y) = \frac{\iint_{-\infty}^{\infty} |P(\zeta,\eta)|^2 \exp\left[-i\frac{2\pi}{\lambda z}(\Delta x \bullet \zeta + \Delta y \bullet \eta)\right] d\zeta d\mu}{\iint_{-\infty}^{\infty} |P(\zeta,\eta)|^2 d\zeta d\mu} \qquad (36)$$

$$e_{II}(r_1, r_2) = \langle I(r)\rangle^2 \left\{ 1 + \left| \frac{\iint_{-\infty}^{\infty} |P(\zeta,\eta)|^2 \exp\left[-i\frac{2\pi}{\lambda z}(\Delta x \bullet \zeta + \Delta y \bullet \eta)\right] d\zeta d\mu}{\iint_{-\infty}^{\infty} |P(\zeta,\eta)|^2 d\zeta d\mu} \right|^2 \right\} \qquad (37)$$

Under most conditions, temporal speckle pattern formed on an observation plane when a laser beam illuminates a continual deformation object surface is observed by the used of an imaging device. Thus, for estimating the characteristic size of speckle, it is usually considered that the circular surface defined by the lens set of the imaging device is the homogeneously illuminated diffuse surface. As the diffused light field is determined by the illumination light field and the complex reflection coefficients of the diffuse surface and the illumination light field is commonly being a slow varying value, the characteristics of the diffused light field is primarily determined by the characteristics of the diffuse surface. As for the imaging device, one might considered the outgoing light of the imaging device as a new non-coherence light source. Therefore, assuming the diameter of the lens is D, thus

$$|P(x,y)|^2 = circ\left(\frac{\sqrt{x^2 + y^2}}{D/2}\right) \qquad (38)$$

and the light intensity autocorrelation function of the corresponding observation surface will be defined as:

$$e_{II}(r_1, r_2) = \langle I\rangle^2 \left\{ 1 + \left| \frac{2J_1(kDr/2z)}{kDr/2z} \right|^2 \right\} \qquad (39)$$

wherein $J_1$ is a first order Bassel function of the first kind;

$$r = \left[(\Delta x)^2 + (\Delta y)^2\right]^{1/2}$$

As the first root of $J_1$ is 3.832, the corresponding speckle radius is $\Delta r = 1.22\lambda z/D$. In reality, it is conventionally defining the spatial area corresponding to the first dropping of the $J_1$ of the autocorrelation function to the half of its maximum to be a coherence area, and thus its linearity will be the speckle diameter $D_s$, i.e. characteristic size. Form the above description, as soon as a speckle pattern is formed, its characteristic size is as following:

$$D_S = 1.22\lambda z/D \qquad\qquad (40)$$

wherein z is the imaging distance of the lens.

When the diffuse surface is supported to be disposed at an infinite point far away and the speckle pattern is observed from the back focal plane of the lens, the average diameter of the speckle is:

$$D_S = 1.22\lambda(f/D) \qquad\qquad (41)$$

wherein f is the focal length of the lens, and f/D is referred as its f number.

Thus, the characteristic size of speckle is only related to the lens and is not related to the size of the diffuse surface, which is the Fraunhofer speckle pattern. It is noted that the f number of any typical imaging device is ranged between f/1.4 ~ f/32, and if the speckle pattern is formed by illuminating an object's surface by a He-Ne laser beam, $\lambda$ = 632.8 nm, the corresponding speckle has characteristic size varying between 1~24 $\mu$m.

When propagating in free space, the diffuse surface is usually being considered as a circular surface illuminated by a light of homogenous light intensity distribution. Thus, similar to the above description, the average diameter of its speckle is as following:

$$D_S = 1.22\lambda(z/D) \qquad\qquad (42)$$

wherein D is the diameter of the diffuse surface

z is the distance between the diffuse surface and the observation surface.

Recently, laser speckle effect had been vastly used in the studies relating to surface roughness, imaging system adjustment and imaging quality evaluation, and so forth. With respect to the aforesaid basic characteristics of speckle, representing by its light intensity distribution, contrast, and characteristic size, the present invention is intended to provide a method of speckle size and distribution control and the optical system using the same. Preferably, the optical system is arranged inside a housing of a computer mouse that is primarily composed of a laser unit, a lens set, an image sensing unit and a digital signal processing unit. A laser mouse is an advanced optical mouse, which is capable of emitting a coherent light so as to detect more surface pattern variation than the standard LED based optical mice. However, by projecting a laser beam onto a surface with sufficient roughness, i.e. the average height variations of the surface is larger than the wavelength of that laser beam, the surface will exhibits a speckled appearance which is not observed when the surface is illuminated with ordinary light, such as the LED light of a standard LED mouse, as the speckle pattern is a random intensity pattern produced by the mutual interference of coherent laser beam that are subject to phase differences and/or intensity fluctuations. The method and the optical system of the invention controls the speckle sizes and the speckle pattern distribution by adjusting the bandwidth of a coherent laser beam being emitted out of the laser light source of the optical system as well as by adjusting the distance between an image plane of the digital signal processing unit and the rough surface being illuminated by the coherent laser beam, so that the distribution of the resulting speckle pattern and the size of each speckle thereof can match with the effective pixel size of different image sensing units used in the optical system. The method and optical system is advantageous in its simple optical path, by which the mechanical structure accuracy is minimized that facilitates and enhances manufacturers of different image sensing units to use different speckle techniques for determining how far the optical system has moved and in which direction it is moved, not to mention that the detection sensitivity of the optical system is adjustable within a predefined range. It is known that if the working surface of a conventional LED optical mouse is a smooth surface made of marble, tile, or metal, etc., the image processing unit used in such LED mouse might not be able to detect patterns of shadows generated by the roughness of the surface and operate without a hitch so as to accurately calculate how far and in what direction the LED mouse has moved. Hence, the method of speckle size and distribution control and the optical system using the same are provided not only for overcoming the inaccuracy of the conventional LED mouse, but also with enhanced convenience of usage by enabling the optical system to be operable on smooth surface as well as with improved operation sensitivity.

Other aspects and advantages of the present invention will become apparent from the following detailed description, taken in conjunction with the accompanying drawings, illustrating by way of example the principles of the present invention.

## BRIEF DESCRIPTION OF THE DRAWINGS

FIG. 1A is a schematic diagram showing the projecting and reflecting of a laser light beam.

FIG. 1B is a schematic view of a speckle pattern.

FIG. 2 is a schematic view showing a laser beam of a laser device illuminating uniformally on a diffuse surface *S* through the collimation of a lens set, where it is reflected and scattered for imaging a *s*peckle pattern on an observation surface *T.*

FIG. 3 is a schematic view showing a laser beam of a laser device illuminating on the center *O* of a diffuse surface *S* through the collimation of a lens set, where it is reflected and scattered for imaging a speckle pattern on an observation surface T.

FIG. 4 is a schematic view showing a laser beam of a laser device illuminating uniformally on a diffuse surface *S* through the collimation of a lens set, where it is reflected and scattered to be collimated by another lens set for imaging a speckle pattern on an observation surface T.

FIG. 5A shows the real and imagery portions of a complex amplitude of an elementary lightwave.

FIG. 5B shows an equivalence probability-density line of a (r, i) plane.

FIG. 5C shows a probability-density function of speckle light intensity.

FIG. 6 is a schematic diagram showing a prior-art optical system of speckle pattern.

FIG. 7 is a schematic diagram showing another prior-art optical system of speckle pattern.

FIG. 8 is a schematic diagram showing a prior-art optical system of speckle pattern with parallel lighting.

FIG. 9 is a schematic diagram showing a prior-art optical system of speckle pattern with collimated lighting.

FIG. 10 is a schematic diagram showing the architecture of an optical system of speckle pattern according a first preferred embodiment of the invention.

FIG. 11 is a schematic diagram showing the architecture of an optical system of speckle pattern according a second preferred embodiment of the invention.

FIG. 12 is a schematic diagram showing the architecture of an optical system of speckle pattern according a third preferred embodiment of the invention.

FIG. 13 is a schematic diagram showing the architecture of an optical system of speckle pattern according a fourth preferred embodiment of the invention.

FIG. 14 shows an optical system of speckle pattern according a first preferred embodiment of the invention.

FIG. 15 shows an optical system of speckle pattern according a second preferred embodiment of the invention.

FIG. 16 shows an optical system of speckle pattern according a third preferred embodiment of the invention.

FIG. 17 shows an optical system of speckle pattern according a fourth preferred embodiment of the invention.

FIG. 18 shows an optical system of speckle pattern according a fifth preferred embodiment of the invention.

FIG. 19 shows the use of speckle patterns for determining how far an optical system has moved and in which direction it is moved according to the present invention.

FIG. 20 is a schematic diagram illustrating the connection of a laser mouse of the invention with a personal computer.

## DESCRIPTION OF THE PREFERRED EMBODIMENT

For your esteemed members of reviewing committee to further understand and recognize the fulfilled functions and structural characteristics of the invention, several preferable embodiments cooperating with detailed description are presented as the follows.

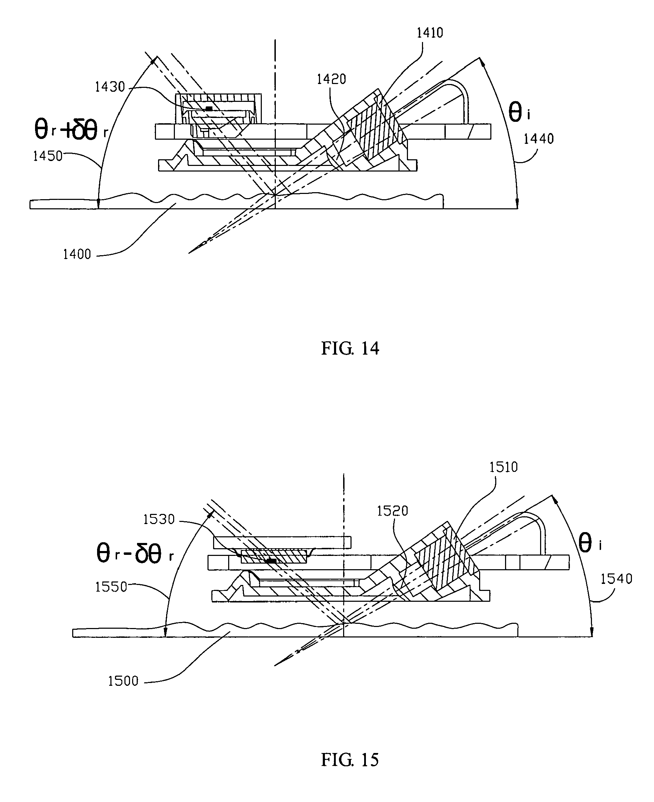

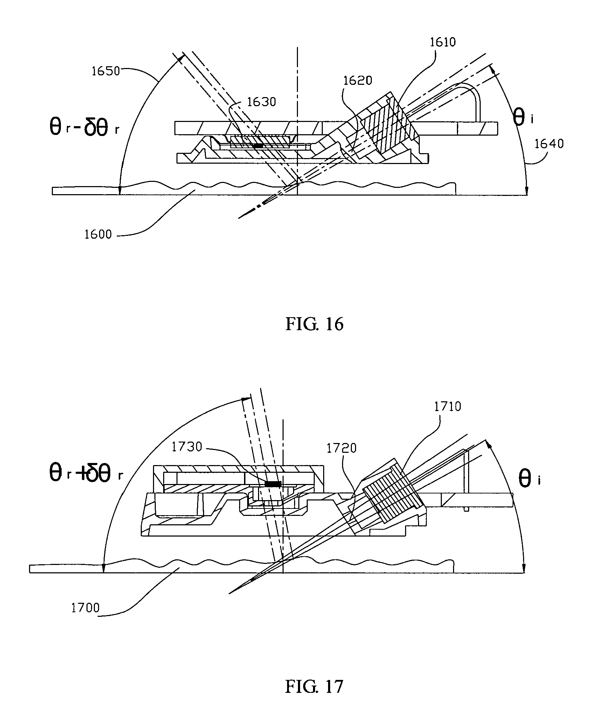

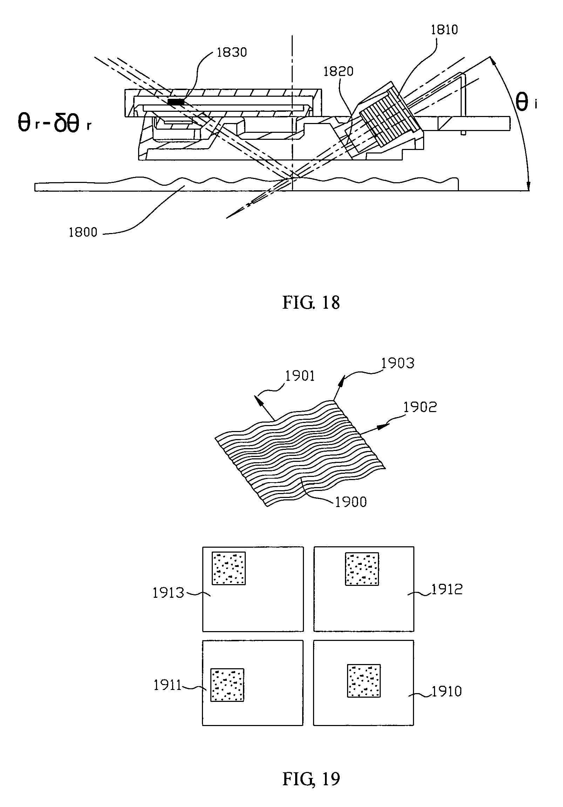

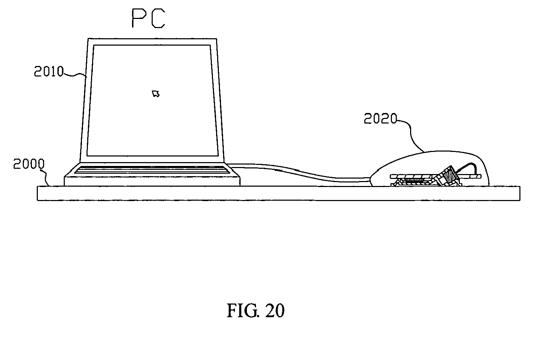

Please refer to FIG. 14 to FIG. 18 and FIG. 20, which show respectively various optical system and their methods of speckle size and distribution control, As seen in FIG. 20, an optical system is arranged inside a housing 2020 of a laser computer mouse. Preferably, the optical system 2020 is primarily composed of: a laser device 1410 (or 1510, or 1610, or 1710, or 1810), a lens set 1420 (or 1520, or 1620, or 1720, or 1820) and an imaging device 1430 (or 1530, or 1630, or 1730, or 1830), as seen in FIG. 14 (or in FIG. 15, or in FIG. 16, or in FIG. 17, or in FIG. 18), in which the laser device 1410 (or 1510, or 1610, or 1710, or 1810) is used as a light source for providing a laser beam to the optical system 2020; the lens set 1420 (or 1520, or 1620, or 1720, or 1820) is used for collimating the laser beam into a coherent laser beam with comparatively narrower bandwidth while projecting the narrower coherent laser beam onto a working surface 2000 contacting to the bottom of the housing 2020 of the laser computer mouse; the imaging device 1430 (or 1530, or 1630, or 1730, or 1830) is integrated with the lens set 1420 (or 1520, or 1620, or 1720, or 1820) for imaging a speckle pattern resulting from the illuminating of the laser beam of the laser device 1410 (or 1510, or 1610, or 1710, or 1810) upon the working surface 2000; and the digital processing device, electrically connected to the imaging device 1430 (or 1530, or 1630, or 1730, or 1830) for receiving and processing the speckle pattern of the imaging device1430 (or 1530, or 1630, or 1730, or 1830), such as the data 1901 ~ 1903 of FIG. 19, so as to evaluate how far the laser computer mouse has moved and in which direction it is moved. The aforesaid optical system uses a lens set 1420 (or 1520, or 1620, or 1720, or 1820) to collimate a laser beam of the laser device1410 (or 1510, or 1610, or 1710, or 1810) into a coherent laser beam with comparatively narrower bandwidth as well as changing a focused position of the collimated laser beam, so that the distance between an image plane of a digital processing device and the working surface can be adjusted and thus the distribution of the resulting speckle pattern and the size of each speckle thereof can be adjusted for matching with the effective pixel size of different image devices used in an optical system. The method and optical system is advantageous in its simple optical path, by which the mechanical structure accuracy is minimized that facilitates and enhances manufacturers of different image sensing units to use different speckle techniques for determining how far the optical system has moved and in which direction it is moved, not to mention that the detection sensitivity of the optical system is adjustable by adjusting the distance between an image plane of a digital processing device and the working surface as well as varying a reflection angle of the laser beam to be reflected from the working surface within $\pm \delta\theta r$ range so as to enable the optical system to be operable on smooth surface as well as with improved operation sensitivity.

From the above description, it is noted that the present invention is intended to provide a method of speckle size and distribution control and the optical system using the same, which enable manufacturers of different image sensing units to use different speckle techniques for determining how far the optical system has moved and in which direction it is moved.

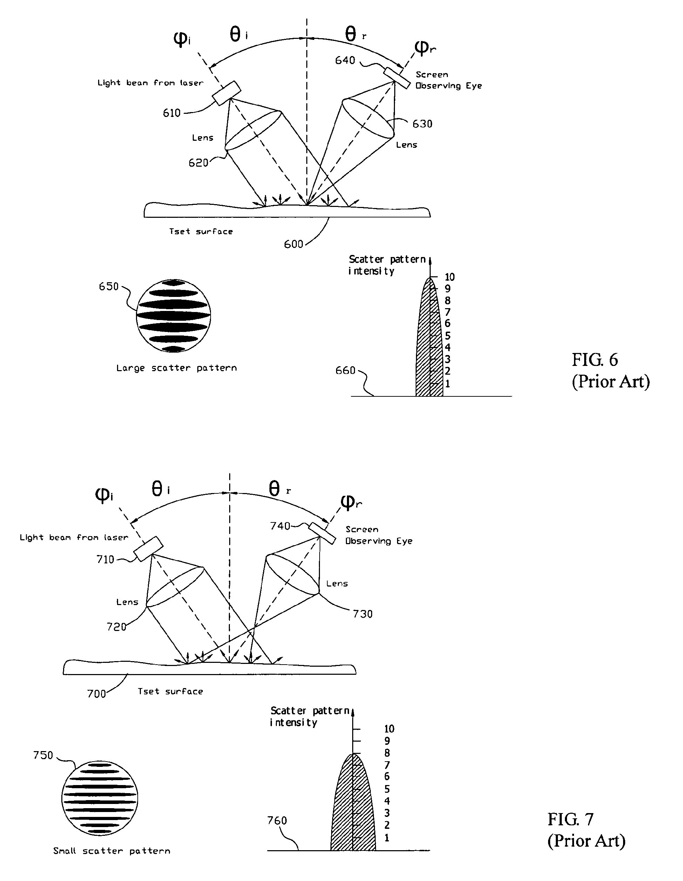

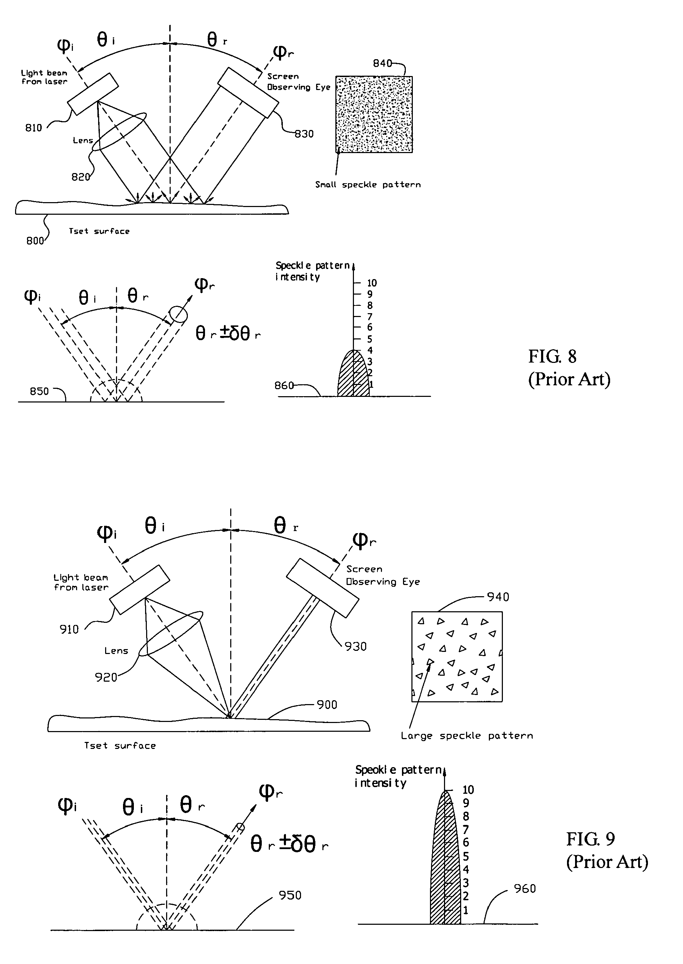

Please refer to FIG. 6, which is a schematic diagram showing a prior-art optical system of speckle pattern. In FIG. 6, the laser light beam of the laser device 610 is collimated by the first lens 620 for enable the laser device 610 to be used as a wide bandwidth laser source and directed the collimated laser beam to illuminate the working surface 600, being positioned right at the focal point of the second lens 630, thereby an interference pattern 650 of intensity 660 can be observed from the observation plane 640 through the second lens 630. However, as the intensity of the real portion of the interference pattern observed at the focal point of the second lens 630 is too intense and its characteristic size is too large, the matching of such interference pattern with effective pixel size of the detector array of ordinary manufacturers can not be satisfied. Please refer to FIG. 7, which is an improved system over that of FIG. 6. Instead of positioning the working surface right at the focal point of the second lens for speckle observation, the nominal image plane of the second lens 740 does not coincide with the working surface 700 that is considered to be a defocused image place being above surface. Under the defocused condition shown in FIG. 7, the intensity pattern detected at the observation plane 740 is a diffraction pattern 750 of intensity 760. As the interference pattern, intensity and characteristic size observed at the observation plane 740 are the imagery portion of the diffraction pattern, which can be referred from the formulas (16a) and (16b), only a handful of manufacturers have matching imaging devices. It is noted that only reflected rays from working surface 600 or 700 having $\theta_i \approx \theta_r$ make up reflection beam capable of being received by a detector array arranged at the observation plane 640 or 740, so that both the optical systems of FIG. 6 and FIG. 7 require to be precisely structured. Please refer to FIG. 8, which is a schematic diagram showing a prior-art optical system of speckle pattern with parallel lighting. In FIG. 8, the laser light beam of the laser device 810 is collimated by the first lens 820 for enable the laser device 810 to be used as a wide bandwidth laser source and directed the collimated laser beam to illuminate the working surface 800, thereby a speckle pattern 840 of intensity 860 can be observed from the observation plane 830. However, as the intensity of the speckle pattern is too weak, i.e. most area of the speckle pattern 840 is composed of darker speckles, and its characteristic size is too small, the matching of such speckle pattern with effective pixel size of the detector array of ordinary manufacturers can not be satisfied. Please refer to FIG. 9, which is a schematic diagram showing a prior-art optical system of speckle pattern with collimated lighting. In FIG. 9, instead of enabling the laser device to produce a wide band laser beam, the laser light beam of the laser device 910 is collimated by the first lens 920 for enable the laser device 910 to be used as a narrow bandwidth laser source and directed the collimated laser beam to illuminate the working surface 900, thereby a speckle pattern 940 of intensity 960 can be observed from the observation plane 930. However, as the intensity of the speckle pattern is too intense and its characteristic size is too large, the matching of such speckle pattern with effective pixel size of the detector array of ordinary manufacturers also can not be satisfied.

As all the optical system illustrated in FIG. 6 ~ FIG. 9 can not generate speckle pattern with intensity distribution and characteristic size matching with the effective pixel size of detector array of different manufacturers used in the optical system. The optical system is required to be improved.

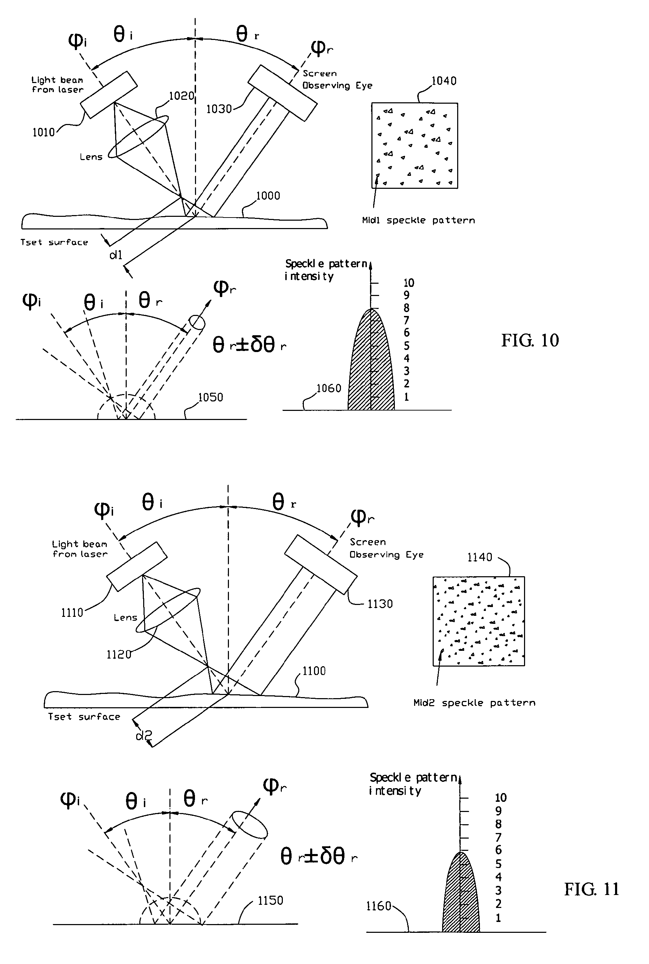

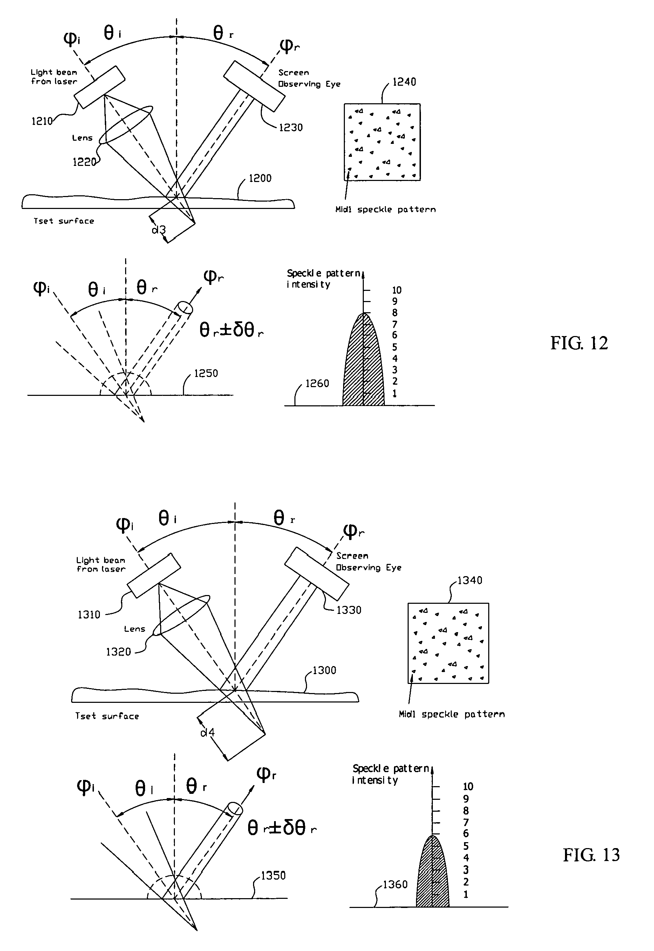

Therefore, it is intended in the present invention to provide a method of speckle size and distribution control and the optical system using the same, that are free from the abovementioned shortcomings. As seen in FIG. 10 (or in FIG. 11, or in FIG. 12, or in FIG. 13), in which the laser device 1010 (or 1110, or 1210, or 1310) is used as a light source for providing a laser beam to the optical system; the lens set 1020 (or 1120, or 1220, or 1320) is used for collimating the laser beam into a coherent laser beam with comparatively narrower bandwidth while projecting the narrower coherent laser beam onto a working surface 1000 by the defining of the change focused position d1 (or d2, or d3, or d4) specified by the positioning of the lens set 1020 (or 1120, or 1220, or 1320). Thereby, the speckle pattern, intensity 1060 (or 1160, or 1260, or 1360), the characteristic size 1040 (or 1140, or 1240, or 1340), imaged on the observation plane 1030, are defined with respect to the adjusting of the change focused position d1 (or d2, or d3, or d4). Thus, the adjusting of the distance between the observation plane and the working surface for speckle distribution and size control can be achieved by the adjusting of the change focused position d1 (or d2, or d3, or d4), so that the distribution of the resulting speckle pattern and the size of each speckle thereof can match with the effective pixel size of detector arrays of different manufacturers used in the optical system. In addition, as the complex amplitude U(r) of a speckle field observed within $\pm \delta\theta r$ reflection angle range is a random variable, whose real and imagery portions are independent to each other and having characteristics defined by the formulas (4), (5) and (8), it can be referred as Gaussian random variable of circular complex, whose equivalence probability-density line can be presented as circles on a complex plane, as seen in FIG. 5B. Moreover, by the formulas (16a) ~ (22), one can concluded that the light intensity distribution of the polarized speckle field follows Negative exponential statistics and its phase follows uniform statistics. By the formula (22), i.e. $P_{I,\theta}(I,\theta) = P_I(I)P_\theta(\theta)$, the light intensity and phase at any point in the speckle field are statistically independent to each other. Thus, the incident angle $\theta i$ of the laser beam is not necessary equal to the reflection angle $\theta r \pm \delta\theta r$ of the laser beam, (i.e. $\theta i \neq (\theta r \pm \delta\theta r)$, so as to reduce the accuracy requirement of structure applying the method as the geometrical optical paths are simplified. The method and optical system is advantageous in its simple optical path, by which the mechanical structure accuracy is minimized that facilitates and enhances manufacturers of different image sensing units to use different speckle techniques for determining how far the optical system has moved and in which direction it is moved, not to mention that the detection sensitivity of the optical system is adjustable by varying a reflection angle of the laser beam to be reflected from the working surface within $\pm \delta\theta r$ range so as to enable the optical system to be operable on smooth surface as well as with improved operation sensitivity

To sum up, a method of speckle size and distribution control and the optical system using the same are disclosed. Preferably, the optical system is arranged inside a housing of a computer mouse that is primarily composed of a laser unit, a lens set, an image sensing unit and a digital signal processing unit. A laser mouse is an advanced optical mouse, which is capable of emitting a coherent light so as to detect more surface pattern variation than the standard LED based optical mice. However, by projecting a laser beam onto a surface with sufficient roughness, i.e. the average height variations of the surface is larger than the wavelength of that laser beam, the surface will exhibits a speckled appearance which is not observed when the surface is illuminated with ordinary light, such as the LED light of a standard LED mouse, as the speckle pattern is a random intensity pattern produced by the mutual interference of coherent laser beam that are subject to phase differences and/or intensity fluctuations. The method and the optical system of the invention controls the speckle sizes and the speckle pattern distribution by adjusting the bandwidth of a coherent laser beam being emitted out of the laser light source of the optical system as well as by adjusting the distance between an image plane of the digital signal processing unit and the rough surface being illuminated by the coherent laser beam, so that the distribution of the resulting speckle pattern and the size of each speckle thereof can match with the effective pixel size of different image sensing units used in the optical system. The method and optical system is advantageous in its simple optical path, by which the mechanical structure accuracy is minimized that facilitates and enhances manufacturers of different image sensing units to use different speckle techniques for determining how far the optical system has moved and in which direction it is moved, not to mention that the detection sensitivity of the optical system is adjustable within a predefined range. It is known that if the working surface of a conventional LED optical mouse is a smooth surface made of marble, tile, or metal, etc., the image processing unit used in such LED mouse might not be able to detect patterns of shadows generated by the roughness of the surface and operate without a hitch so as to accurately calculate how far and in what direction the LED mouse has moved. Hence, the method of speckle size and distribution control and the optical system using the same are provided not only for overcoming the inaccuracy of the conventional LED mouse, but also with enhanced convenience of usage by enabling the optical system to be operable on smooth surface as well as with improved operation sensitivity.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments which do not depart from the spirit and scope of the invention.

**Claims**

1.    An optical system with speckle size and distribution control abilities, arranged side a housing of a laser computer mouse, comprising:

a lens set equipped with a hold-down groove, disposed at the bottom of the housing, the hold-down groove further comprising: a positioning cut and a lens;
a laser device, being fixedly arranged in the hold-down groove, used as a light source for providing a laser beam to the optical system;
the lens, used as an optical device for enabling the laser beam to be projected upon a working surface;

an imaging device, being integrated with the lens set for imaging a speckle pattern resulting from the illuminating of the laser beam upon the working surface; and
a digital processing device, electrically connected to the imaging device, for receiving and processing the speckle pattern of the imaging device so as to evaluate how far the laser computer mouse has moved and in which direction it is moved.

2. The optical system of claim 1, capable of collimating a laser beam into a coherent laser beam with comparatively narrower bandwidth while projecting the narrower coherent laser beam onto a working surface by the defining of a change focused position specified by the positioning of the lens set, thereby, the speckle pattern, intensity, the characteristic size, imaged on the observation plane are defined with respect to the adjusting of the change focused position.

3. A method of speckle size and distribution control, comprising the steps of:

(a) using a lens fixedly disposed in a hold-down groove to collimate a laser beam of a laser device fixed by the hold-down groove into a coherent laser beam with comparatively narrower bandwidth;
(b) changing a focused position of the collimated laser beam by the help of different lens, and then projecting the resulting laser beam upon a working surface for enabling the distribution, the intensity of a resulting speckle pattern and the characteristic size of each speckle thereof to be varied accordingly, and
(c) adjusting the distance between an image plane of a digital processing device and the working surface by adjusting the positioning of the focused position, so that the distribution of the resulting speckle pattern and the size of each speckle thereof can match with the effective pixel size of different image devices used in an optical system.

4. The method of claim 3, further comprising the step of:

enabling the detection sensitivity to be adjusted within a specific range by adjusting the distance between an image plane of a digital processing device and the working surface as well as varying a reflection angle of the laser beam to be reflected from the working surface within $\pm \delta\theta r$ range so as to enable the optical system to be operable on smooth surface as well as with improved operation sensitivity.

5. The method of claim 3 or claim 4, further comprising the step of:
enabling the incident angle $\theta_i$ of the laser beam to be not equal to the reflection angle $\theta r \pm \delta\theta r$ of the laser beam, (i.e. $\theta i \neq (\theta r \pm (\delta\theta r)$) so as to reduce the accuracy requirement of structure applying the method as the geometrical optical paths are simplified.

6. The optical system of claim 2, capable of being utilized by various manufacturers of different imaging devices as it can facilitate those manufacturers to use speckle patterns for determining how far the corresponding imaging device has moved and in which direction it is moved in an accurate manner.

**Light beam from laser** $\varphi_{i1}$

**Light beam from laser** $\varphi_{i2}$

**Light beam from laser** $\varphi_{i3}$

110

120

130

1101 $\varphi_{r1}$

$\varphi_{r3}$

$\varphi_{r2}$

1201

1301

Test surface

100

101

1~600um

height varivations

FIG. 1A

speckle pattern

FIG. 1B

Light beam from laser

Lens

Tset surface

y

x

o

S

200

210

220

y'

x'

o'

z

T

Screen
Observing Eye

230

FIG. 2

Tset surface

y

x

o

S

300

y'=My

x'=Mx

o'

z

T

Screen
Observing Eye

330

320

Lens

310

Light beam from laser

FIG. 3

18

FIG. 4

FIG. 5A

FIG. 5B

FIG. 5C

FIG. 6
(Prior Art)

FIG. 7
(Prior Art)

FIG. 8
(Prior Art)

FIG. 9
(Prior Art)

FIG. 10

FIG. 11

23

FIG. 12

FIG. 13

FIG. 14

FIG. 15

FIG. 16

FIG. 17

$\theta_r - \delta\theta_r$

1830

1820

1810

$\theta_i$

1800

FIG. 18

1901

1903

1902

1900

1913

1912

1911

1910

FIG. 19

FIG. 20

**European Patent Office**

## EUROPEAN SEARCH REPORT

Application Number

EP 07 25 1124

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/249449 A1 (WELCH PAUL M [US] ET AL) 10 November 2005 (2005-11-10) * figures 4,7 * * paragraph [0005] * * paragraphs [0016] - [0021] * ----- | 1-6 | INV. G06F3/033 G06F3/03 |
| A | US 2005/264531 A1 (TAI LI C [MY] ET AL) 1 December 2005 (2005-12-01) * figures 2,3,5 * * paragraphs [0016] - [0020] * * paragraph [0030] * * paragraphs [0047] - [0051] * ----- | 1-6 | |

**TECHNICAL FIELDS SEARCHED (IPC)**

G06F

The present search report has been drawn up for all claims

| Place of search | Date of completion of the search | Examiner |
|---|---|---|
| The Hague | 31 August 2007 | Piriou, Nominoë |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 25 1124

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2007

| Patent document cited in search report | | Publication date | Patent family member(s) | | Publication date |
|---|---|---|---|---|---|
| US 2005249449 | A1 | 10-11-2005 | CN | 1694054 A | 09-11-2005 |
| | | | GB | 2413846 A | 09-11-2005 |
| | | | JP | 2005322911 A | 17-11-2005 |
| US 2005264531 | A1 | 01-12-2005 | NONE | | |

EPO FORM P0459

For more details about this annex : see Official Journal of the European Patent Office, No. 12/82